# EUROPEAN PATENT APPLICATION

(11) **EP 2 445 100 A1**
(43) Date of publication of application: **25.04.2012**
(21) Application number: 10782891.5
(22) Date of filing: 26.05.2010
(51) Int. Cl.: H02M 7/537

(54) **CIRCUIT FOR CONVERTING DC VOLTAGE TO AC VOLTAGE**

(30) Priority: 04.06.2009 CN 200910086062
(71) Applicant: Beijing Kinglong New Energy Technology Co., Ltd, Beijing 100085 (CN)
(72) Inventor: YU, Zhonglan, Beijing 100084 (CN)
(74) Representative: Algemeen Octrooi- en Merkenbureau
(86) International application number: PCT/CN2010/000751
(87) International publication number: WO 2010/139187

(57) **Abstract**

A circuit for converting DC voltage to AC voltage comprises an inverter (2) and a DC power supply (1) comprising a solar energy generator (SG) and a capacitor (C1). The inverter (2) includes six switch devices (S1, S2, S3, S4, S5, S6), diodes (D1, D2, D3, D4, D5, D6) respectively connected in parallel with corresponding one of the switch devices (S1, S2, S3, S4, S5,S6), a seventh and an eighth diodes (D7, D8) and a first and a second inductors (L1, L2). The first, the third and the fifth switch devices (S1, S3, S5) are connected in series. The second, the fourth and the sixth switch devices (S2, S4, S6) are connected in series. The two series connected circuits are connected in parallel between the two terminals of the capacitor (C1). The cathode of the seventh diode (D7) is connected with the first terminal of the third switch device (S3) and the anode of the seventh diode (D7) is connected with the second terminal of the fourth switch device (S4). The cathode of the eighth diode (D8) is connected with the first terminal of the fourth switch device (S4) and the anode of the eighth diode (D8) is connected with the second terminal of the third switch device (S3). The first terminal of the first inductor (L1) is connected with the second terminal of the fourth switch device (S4). The first terminal of the second ductor(L2) is connected with the second terminal of the third switch device (S3). The second terminal of the first inductor (L1) and the second terminal of the second inductor (L2) are respectively connected with two terminals of an AC load or the mains supply. Electromagnetic interference can be reduced by the circuit.

## Description

### BACKROUND

### 1. Technical Field of the present invention.

The invention relates to solar power generation technology field, and more particularly relates to a circuit for converting DC voltage to AC voltage, which has accomplished the purpose for converting DC to AC, has eliminated the probability of occurrence of high frequency voltage on the input terminal, and also has accomplished high-efficiency conversion.

### 2. Description of prior art.

As is known to all, the technology for converting AC supply to DC stabilized voltage supply has become mature, but the technology for converting DC voltage to AC voltage has a short development history, the earlier design of which dominantly utilized a low-frequency converter that was always large in size and weight, and had low efficiency.

A method has been developed to convert the DC voltage of photoelectric DC supply to the AC voltage, but it encounters following two problems: low efficiency and high risk of occurrence of high frequency voltage on the input terminal. The patent CN200510079923.1 is a method to convert the DC voltage of DC supply to AC voltage, and it has accomplished the purpose for converting DC to AC, has eliminated the probability of occurrence of high frequency voltage on the input terminal (EMV problem has been minimized), and also has accomplished high-efficiency conversion.

Therefore, the problem that the inventor in the present invention will resolve is how to design a circuit for converting DC to AC, which can also eliminate the probability of occurrence of high frequency voltage on the input terminal and accomplish the purpose of high-efficiency conversion.

### SUMMARY OF THE PRESENT INVENTION

The main object of the present invention is to provide a circuit for converting DC voltage to AC voltage, which is capable to eliminate the probability of occurrence of high frequency voltage on the input terminal, meanwhile to accomplish high-efficiency conversion.

To achieve the foregoing object, the invention provides a circuit for converting DC voltage to AC voltage, which comprises an inverter (2) and a DC power supply (1) comprises a solar power generator (SG) and a capacitor (C1), wherein said inverter (2) comprises:
six switch devices (S1, S2, S3, S4, S5, S6): each switch device having a first terminal and a second terminal; the second terminal of said first switch device (S1) is connected with the first terminal of said third switch device (S3), the second terminal of said third switch device (S3) is connected with the first terminal of said fifth switch device (S5), the first terminal of said first switch device (S1) and the second terminal of said fifth switch device (S5) are connected with the two terminals of said capacitor (C1) respectively, the second terminal of said second switch device (S2) is connected with the first terminal of said fourth switch device (S4), the second terminal of said fourth switch device (S4) is connected with the first terminal of said sixth switch device (S6), and the first terminal of said second switch device (S2) and the second terminal of said sixth switch device (S6) are connected with the two terminals of said capacitor (C1) respectively;
six diodes (Dl, D2, D3, D4, D5, D6): connected in inverse parallel connection with the two terminals of corresponding one of said six switch devices (S1, S2, S3, S4, S5, S6) respectively;
a seventh diode (D7): the cathode of said seventh diode (D7) is connected with the first terminal of said third switch device (S3), and the anode of said seventh diode (D7) is connected with the second terminal of said fourth switch device (S4);
a eighth diode (D8): the cathode of said eighth diode (D8) is connected with the first terminal of said fourth switch device (S4), and the anode of said eighth diode (D8) is connected with the second terminal of said third switch device (S3);
a first inductor (L1): the first terminal of said first inductor (L1) is connected with the second terminal of said fourth switch device (S4); and
a second inductor (L2): the first terminal of said second inductor (L2) is connected with the second terminal of said third switch device (S3), and the second terminal of said first inductor (L1) and the second terminal of said second inductor (L2) are connected with two terminals of an AC load or to the mains supply.

Whereinsaid first switch device (S1), said second switch device (S2), said fifth switch device (S5) and said sixth switch device (S6) are symmetrical switch transistors.

Wherein said switch transistors (S1, S2, S5, S6) are MOSFET transistors.

Whereinsaid third switch device (S3) and said fourth switch device (S4) are IGBT transistors.

Wherein said third switch device (S3) and said fourth switch (S4) device are triggered by a signal with output frequency of 50Hz.

Wherein said first switch device (S1), said second switch device (S2), said fifth switch device (S5) and said sixth switch device (S6) are triggered by a pulse signal of KHz level and a signal of 50Hz.

Wherein said pulse signal of KHz level is a signal of 20 KHz.

The beneficial technology effects of the present invention are: no high frequency voltage occurs on the input terminal station and mains supply side when the invention implements high frequency switch, thus electromagnetic interference is reduced, and efficiency and stability are increased.

The foregoing and other objects, features and advantages of the present invention will be more clearly understood by the following detailed description or best mode of preferred embodiments of the present invention as illustrated with the accompanying drawings.

### BRIEF DESCRIPTION OF THE DRAWINGS

FIG. 1 schematically represents a circuit layout of the present invention.
FIG. 2 schematically represents a current circuit of the present invention, wherein the mains supply connected with the inverter's output teminals or the output of the inverter applied as an independent voltage supply is positive, and the status of the high frequency trigger signal is 1.
FIG. 3 schematically represents a current circuit of the present invention, wherein the mains supply connected with the inverter's output teminals or the output of the inverter applied as an independent voltage supply is positive, and the status of the high frequency trigger signal is 0.
FIG. 4 schematically represents a current circuit of the present invention, wherein the mains supply connected with the inverter's output teminals or the output of the inverter applied as an independent voltage supply is negative, and the status of the high frequency trigger signal is 1.
FIG. 5 schematically represents a current circuit of the present invention, wherein the mains supply connected with the inverter's output teminals or the output of the inverter applied as an independent voltage supply is negative, and the status of the high frequency trigger signal is 0.

Brief description of the drawing reference signs: DC power supply-1; Inverter-2; Solar power generator-SG; First switch device-S1; Second switch device-S2; Third switch device-S3; Fourth switch device-S4; Fifth switch device-S5; Sixth switch device-S6; First diode-D1; Second diode-D2; Third diode-D3; Fourth diode- D4; Fifth diode-D5; Sixth diode- D6; Seventh diode-D7; Eighth diode- D8; First inductor- L1; Second inductor-L2.

### DETAILED DESCRIPTION and or BEST MODE OF THE PRESENT INVENTION

The following preferred embodiments with reference to the accompanying drawings are provided in detail to assist in a comprehensive understanding of the shape, the structure and the feature of the present invention.

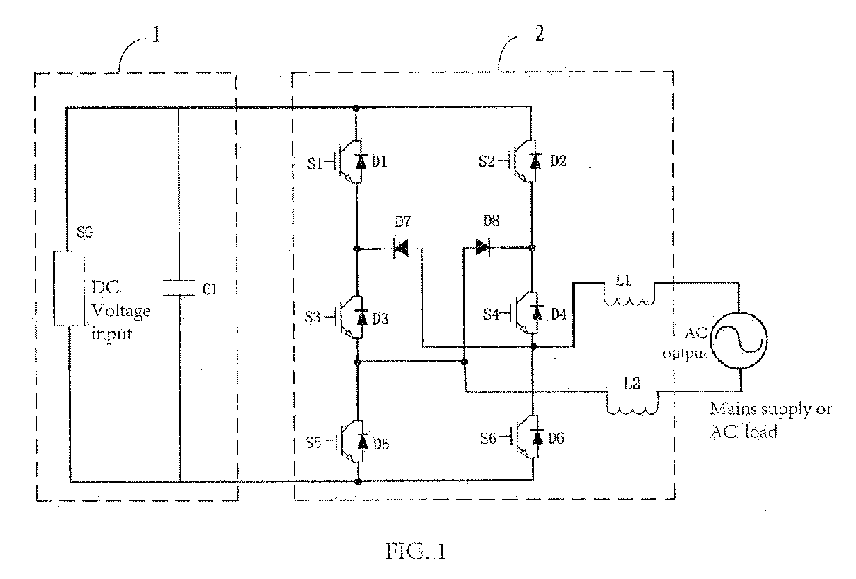

As shown in FIG. 1, said circuit for converting DC voltage to AC voltage comprises a DC power supply 1 and a inverter 2, and said DC power supply 1 comprises a solar power generator SG and a capacitor C1;

Said inverter 2 comprises six switch devices S1,S2,S3,S4,S5,S6 and six diodes D1,D2,D3,D4,D5,D6; wherein said six diodes D1,D2,D3,D4,D5,D6 are respectively connected in inverse parallel connection with two terminals of corresponding one of said six switch devices S1,S2,S3,S4,S5,S6: the first diode D1 is connected in inverse parallel connection with the two terminals of the first switch device S1, the second diode D2 is connected in inverse parallel connection with the two terminals of the second switch device S2, the third diode D3 is connected in inverse parallel connection with the two terminals of the third switch device S3, the fourth diode D4 is connected in inverse parallel connection with the two terminals of the fourth switch device S4, the fifth diode D5 is connected in inverse parallel connection with the two terminals of the fifth switch device S5, and the sixth diode D6 is connected in inverse parallel connection with the two terminals of the sixth switch device S6;

Each one of said six switch devices S 1, S2, S3, S4, S5, S6 has a first terminal and a second terminal; the second terminal of said first switch device S1 is connected with the first terminal of said third switch device S3, the second terminal of said third switch device S3 is connected with the first terminal of said fifth switch device S5, the first terminal of said first switch device S1 and the second terminal of said fifth switch device S5 are connected with the two terminals of said capacitor C1 respectively, the second terminal of said second switch device S2 is connected with the first terminal of said fourth switch device S4, the second terminal of said fourth switch device S4 is connected with the first terminal of said sixth switch device S6, and the first terminal of said second switch device S2 and the second terminal of said sixth switch device S6 are connected with the two terminals of said capacitor C1 respectively;

Said inverter 2 comprises one first inductor L1 and one second inductor L2; the first terminal of said first inductor L1 is connected with the second terminal of said fourth switch device S4, the first terminal of said second inductor L2 is connected with the second terminal of said third switch device S3, the second terminal of said first inductor L1 and the second terminal of said second inductor L2 are connected with the two terminals of AC load or to the mains supply;

Said inverter 2 also contains a seventh diode D7 and an eighth diode D8; the cathode of said seventh diode D7 is connected with the first terminal of said third switch device S3, the anode of said seventh diode D7 is connected with the second terminal of the fourth switch device S4, the cathode of said eighth diode D8 is connected with the first terminal of said fourth switch device S4, and the anode of said eighth diode D8 is connected with the second terminal of said third switch device S3.

While said inverter 2 switches said third switch device S3 and said fourth switch device S4 with a signal of 50Hz output frequency of the mains supply, said first switch device S1, said second switch device S2, said fifth switch device S5 and said sixth switch device S6 are triggered by a high frequency modulation pulse signal of KHz level and a signal of 50Hz.

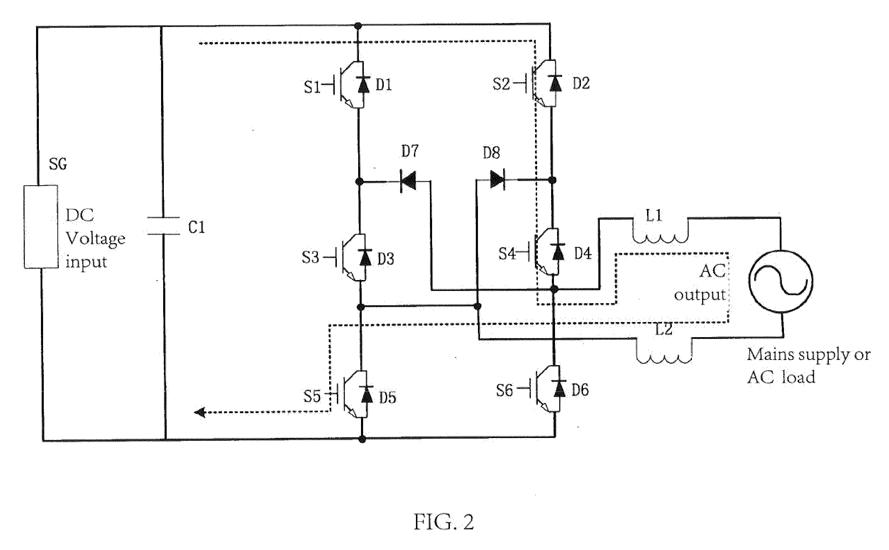

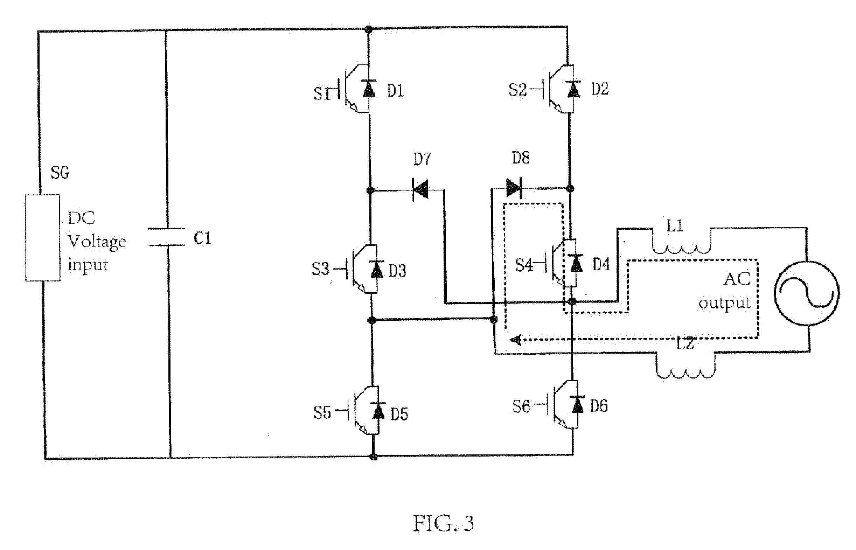

When the mains supply connected with the inverter's output teminals or the output of the inverter applied as an independent voltage supply is positive, the fourth switch device S4 will switch on, the first switch device S1, the third switch device S3 and the sixth switch device S6 will switch off, and the second switch device S2 and the fifth switch device S5 will be triggered by a high frequency signal of KHz level (such as 20 KHz). When the status of high frequency trigger signal is 1, the second switch device S2 and the fifth switch device S5 will switch on , and the current circuit is shown in FIG. 2; and if the output is connected with the mains supply, the midpoint potential of the input DC power supply and the midpoint potential of mains supply will be same. When the status of high frequency trigger signal is 0, the second switch device S2 and the fifth switch device S5 will switch off, and the current circuit is shown in FIG. 3. If the output is connected with the mains supply, the midpoint potential of the mains supply will depend on the divided voltages by the first switch device S1, the second switch device S2, the fifth switch device S5 and the sixth switch device S6; since the first switch device S1, the second switch device S2, the fifth switch device S5 and the sixth switch device S6 are symmetrical switch transistors, the midpoint potential of mains supply and the midpoint potential of the input DC power supply will be same, therefore no high frequency voltage will occur on the input terminal station and mains supply side (if the output of inverter is connected with the mains supply) when the inverter 2 implements high frequency switch, and this will ease Electromagnetic interference.

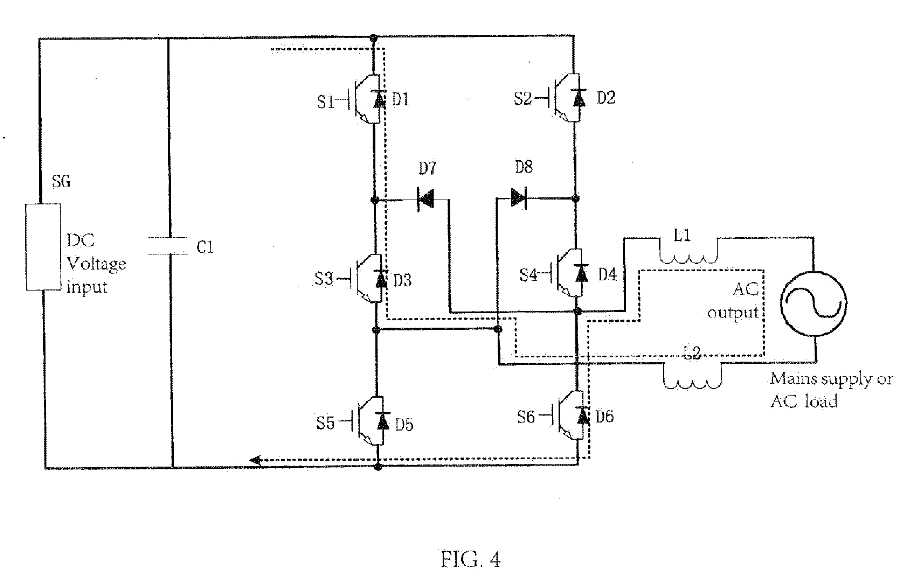

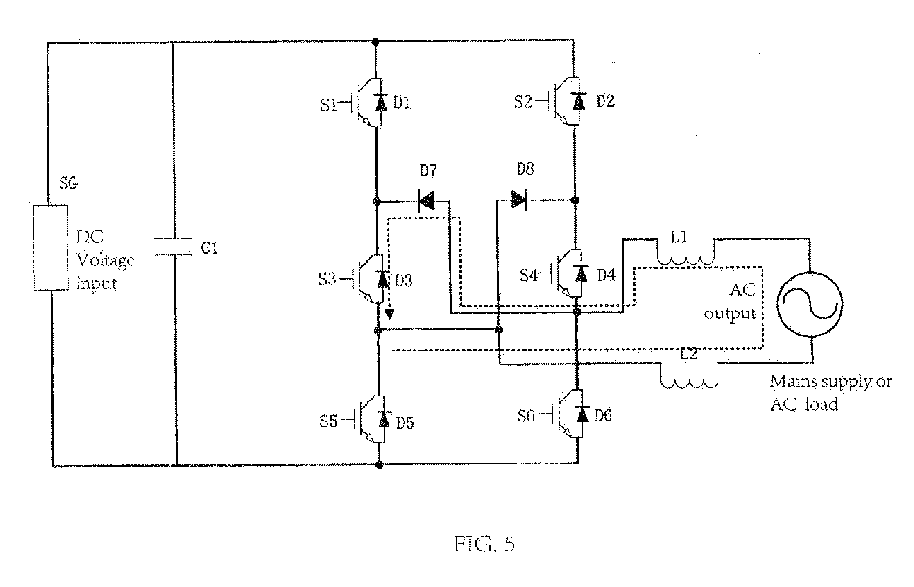

When the mains supply connected with the inverter's output teminals or the output of the inverter applied as an independent voltage supply is negative, the third switch device S3 will switch on, the second switch device S2, the fourth switch device S4 and the fifth switch device S5 will switch off, and the first switch device S1 and the sixth switch device S6 will be triggered by a high frequency signal of KHz level (such as 20 KHz). When the status of high frequency trigger signal is 1, the first switch device S1 and the sixth switch device S6 will switch on, and the current circuit is shown in FIG. 4; and if the output is connected with the mains supply, the midpoint potential of the input DC power supply and the midpoint potential of mains supply will be same. When the status of high frequency trigger signal is 0, the first switch device S1 and the sixth switch device S6 will switch off, and the current circuit is shown in FIG. 5. If the output is connected with the mains supply, the midpoint potential of the mains supply will depend on the divided voltages by the first switch device S1, the second switch device S2, the fifth switch device S5 and the sixth switch device S6; since the first switch device S1, the second switch device S2, the fifth switch device S5 and the sixth switch device S6 are symmetrical switch transistors, the midpoint potential of mains supply and the midpoint potential of the input DC power supply will be same, therefore no high frequency voltage will occur on the input terminal station and mains supply side (if the output of inverter is connected with the mains supply) when the inverter implements high frequency switch, and this will ease Electromagnetic interference.

It is possible to select MOSFET transistors of the same type as switch devices for the first switch device S1, the second switch device S2, the fifth switch device S5 and the sixth switch device S6, and to select IGBT transistors as switch devices for the third switch device S3 and the fourth switch device S4, in order to enhance the efficiency of inverter 2.

It will be appreciated that the foregoing descriptions of the present invention are illustrative, but not restrictive for the ordinary skilled person in the art. Within the scope and the spirit of the claims of the present invention, a plurality of modifications, changes, or equivalences could be made without departing from the scope and spirit of the present invention.

## Claims

1. A circuit for converting DC voltage to AC voltage, which comprises an inverter (2) and a DC power supply (1) comprises a solar power generator (SG) and a capacitor (C1), **characterised in that** said inverter (2) comprises:
six switch devices (S1, S2, S3, S4, S5, S6): each switch device having a first terminal and a second terminal; the second terminal of said first switch device (S1) is connected with the first terminal of said third switch device (S3), the second terminal of said third switch device (S3) is connected with the first terminal of said fifth switch device (S5), the first terminal of said first switch device (S1) and the second terminal of said fifth switch device (S5) are connected with the two terminals of said capacitor (C1) respectively, the second terminal of said second switch device (S2) is connected with the first terminal of said fourth switch device (S4), the second terminal of said fourth switch device (S4) is connected with the first terminal of said sixth switch device (S6), and the first terminal of said second switch device (S2) and the second terminal of said sixth switch device (S6) are connected with the two terminals of said capacitor (C1) respectively;
six diodes (Dl, D2, D3, D4, D5, D6): connected in inverse parallel connection with the two terminals of corresponding one of said six switch devices (S1, S2, S3, S4, S5, S6) respectively;
a seventh diode (D7): the cathode of said seventh diode (D7) is connected with the first terminal of said third switch device (S3), and the anode of said seventh diode (D7) is connected with the second terminal of said fourth switch device (S4);
a eighth diode (D8): the cathode of said eighth diode (D8) is connected with the first terminal of said fourth switch device (S4), and the anode of said eighth diode (D8) is connected with the second terminal of said third switch device (S3);
a first inductor (L1): the first terminal of said first inductor (L1) is connected with the second terminal of said fourth switch device (S4); and
a second inductor (L2): the first terminal of said second inductor (L2) is connected with the second terminal of said third switch device (S3), and the second terminal of said first inductor (L1) and the second terminal of said second inductor (L2) are connected with two terminals of an AC load or to the mains supply.

2. A circuit for converting DC voltage to AC voltage as claimed in claim 1 **characterised in that** said first switch device (S1), said second switch device (S2), said fifth switch device (S5) and said sixth switch device (S6) are symmetrical switch transistors.

3. A circuit for converting DC voltage to AC voltage as claimed in claim 2 **characterised in that** said switch transistors (S1, S2, S5, S6) are MOSFET transistors.

4. A circuit for converting DC voltage to AC voltage as claimed in claim 1 **characterised in that** said third switch device (S3) and said fourth switch device (S4) are IGBT transistors.

5. A circuit for converting DC voltage to AC voltage as claimed in claim 1 **characterised in that** said third switch device (S3) and said fourth switch (S4) device are triggered by a signal with output frequency of 50Hz.

6. A circuit for converting DC voltage to AC voltage as claimed in claim 1 **characterised in that** said first switch device (S1), said second switch device (S2), said fifth switch device (S5) and said sixth switch device (S6) are triggered by a pulse signal of KHz level and a signal of 50Hz.

7. A circuit for converting DC voltage to AC voltage as claimed in claim 6 **characterised in that** said pulse signal of KHz level is a signal of 20 KHz.
